# NEW EUROPEAN PATENT SPECIFICATION

(11) **EP 2 353 993 B2**
(45) Date of publication and mention of the opposition decision: **26.10.2022**
(45) Mention of the grant of the patent: 27.11.2019
(21) Application number: 11396001.7
(22) Date of filing: 28.01.2011
(51) Int. Cl.: B63B 35/32, B63B 35/00, B63B 35/54, E02B 15/04

(54) **A ship and a method for using the ship for at least two different purposes**
Ein Schiff und ein Verfahren um das Schiff für mindestens zwei Zwecke zu verwenden
Un navire et un procédé d'utilisation du navire pour au moins deux applications

(30) Priority: 28.01.2010 FI 20100029
(43) Date of publication of application: 10.08.2011
(73) Proprietor: Suomen Saaristovarustamo Oy, 20100 Turku (FI)
(72) Inventor: Hiukka, Veijo, 20300 Turku (FI); Eronen, Harri, 21200 Raisio (FI)
(74) Representative: Laine IP Oy

(56) References cited:
- EP-A2- 0 043 111
- WO-A1-03/043878
- WO-A1-03/043878
- WO-A1-2006/134201
- US-A- 5 102 540

## Description

### OBJECT OF THE INVENTION

The present disclosure relates to a ferry that can be utilized for at least two different purposes, one of the purposes being the transport of passengers and vehicles, and the other one the recovery of oil.

### PRIOR ART

It is often advantageous that passenger vessels can transport, in addition to passengers, at least some cargo, such as vehicles. A ship can also be constructed from the outset as a car ferry capable of easily transporting a significant number of vehicles, such as cars and/or lorries, in addition to passengers. However, passenger vessels have no other uses.

In archipelago areas, ferries generally transport passengers, vehicles and deck cargo between the mainland and the islands. Depending on their size, ferries usually carry several cars or at least one lorry on their car deck. Ferries also operate during winter, as they are capable of breaking ice. Ferries generally have a bow gate and/or stern door that can be opened and through which vehicles are driven to and from the car deck, as well as separate lounge facilities for passengers to use during the voyage. If a ferry has both a bow gate and a stern door, vehicles can be driven through the vessel, i.e. the vehicles will exit the vessel from the opposite end of where they entered the vessel. In this case passenger facilities are usually located above the car deck.

In addition to cargo vessels, several other types of specialised vessels are required at sea, for example oil recovery vessels. A problem related to oil recovery vessels is that a sufficient number of them is required in an emergency, but the need arises relatively seldom. Therefore keeping oil recovery vessels continuously in operational readiness without any other uses is uneconomical.

WO03/043878 discloses a ship with an arrangement for collecting oil. US5102540 discloses a kit for converting a conventional passenger catamaran into a liquid pollutant collector.

### PURPOSE OF THE INVENTION

The purpose of the invention is to create a ship that can be used in a novel way at sea, for its original purpose in addition to other tasks. A further purpose of the invention is to solve the problem that the same vessel generally cannot be used for different purposes because different applications require compliance with varying safety regulations and different structural solutions.

### CHARACTERISTICS OF THE INVENTION

A ship according to the invention is defined in claim 1. The invention is also defined by a method as mentioned in claim 4.

Preferred features of the invention are defined in the dependent claims.

An excellent advantage of the invention is that passenger vessels and ferries can easily and with short delays be available also for other uses when required because they are in almost constant use. A passenger vessel or a ferry equipped with an oil recovery apparatus can almost instantly be converted into an oil recovery vessel. Thus a vessel capable of recovering oil from the surface of water can be quickly dispatched to the site of an accident. Having a quick start to a recovery operation is often decisive in minimising the environmental damage from an oil spill.

A problem with traditional oil recovery vessels is that since accidents resulting in oil spills take place relatively seldom it is not viable to continuously maintain oil recovery vessels in high readiness. Due to the long response delays, traditional oil recovery vessels will not be available very quickly at the scene of an accident. In some cases, getting the vessels on their way can take up to 24 hours.

### EXAMPLE OF EMBODIMENTS 1

According to one embodiment of the invention, the ferry is 35 m long and 9 m wide. It is intended for regular ferry traffic, with adequate space for 11 cars or a single lorry and 125 passengers. The vessel can break 0.35 m thick ice, and its depth is 3.5 m. The draught in passenger vessel mode or as a ro-ro passenger vessel is 2.4 m, while as an oil recovery vessel it can be up to 2.9 m. However, in both applications the vessel can sail even in relatively shallow waters. The vessel is classified for traffic area D in Finnish passenger traffic and for traffic area II as an oil recovery vessel.

The following table shows a comparison of the characteristics of a ferry according to the example in passenger traffic and oil recovery applications.

**Example 1. Comparison of dead weights**

| | Passenger traffic | Oil recovery mode |
|---|---|---|
| 125 passengers | 10 t | |
| Diesel fuel capacity | 13 t | 10 t |
| Ballast | 8 t | 8 t |
| Fresh water | 3 t | 3 t |
| A lorry or 11 cars | 25 t | |
| Crew | 0.5 t | 0.5 t |
| Lubricants etc. | 0.5 t | 0.5 t |
| Urea | 2 t | 2 t |
| Container for oil recovery gear | | 5 t |
| 90 m3 of recovered oil | | 87.5 t |
| Total | 62 t | 116.5 t |

It is advantageous to minimise the necessary amount of ballast. Resetting the characteristics of the vessel can be accomplished by relocating the fuel between the fuel tanks in the bow and in the double hull.

### EXAMPLES SHOWN IN THE DRAWINGS

In the following, the invention is described by an example with reference to the accompanying drawings, in which

### LIST OF FIGURES

- Fig. 1: is a side and partly sectional view of a ferry according to the invention in regular ferry traffic.
- Fig. 2: corresponds to Fig. 1 and shows the ferry when used for oil spill recovery.
- Fig. 3: is a schematic top view of the ferry of Fig. 2 when recovering an oil spill, wherein the parts related to the oil spill recovery equipment are shown as a sectional view.
- Fig. 4: is a side view of a passenger ship according to the invention in regular passenger traffic.
- Fig. 5: corresponds to Fig. 4 and shows the passenger vessel when used for oil recovery.
- Fig. 6: is a schematic top view of the passenger vessel of Fig. 5 when used for oil recovery, wherein the parts related to the oil recovery equipment are shown as a partly sectional view.

### DESCRIPTION OF THE FIGURES

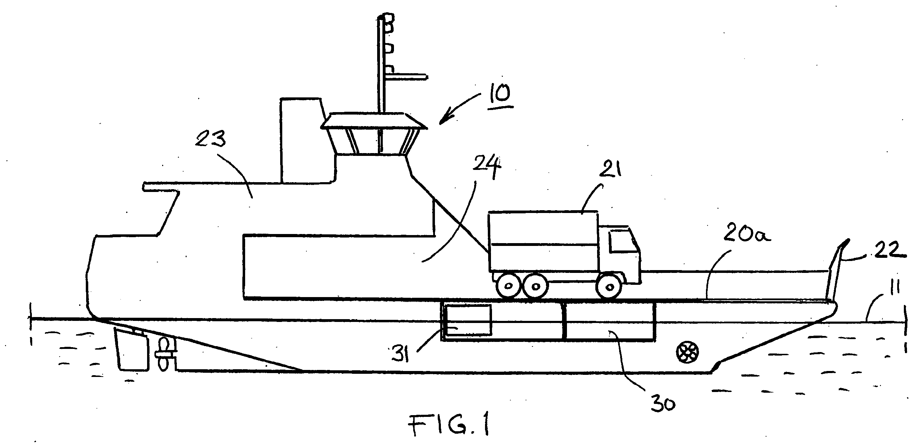

Fig. 1 shows an example of a ship 10 according to the invention as a side view. The ship 10 in this example is a ferry used in an archipelago and, in the configuration shown in the figure, serves regular ferry traffic. A lorry 21 has been driven onto the car deck 20a of the ferry 10 through the bow gate 22. A passenger lounge 23 is located above the car deck 20a. The waterline 11 in Fig. 1 is at such a location that the draught of the ferry 10 corresponds to the draught of a ferry in regular ferry traffic. The draught of the ferry 10 must not be greater because a vessel intended for carrying passengers must have high damage stability. Furthermore, the ferry 10 must have sufficient freeboard at the bow gate 22 to prevent water from entering the car deck 20a via the bow gate 22. This is not a problem in the ferry 10 to be used in an archipelago, however.

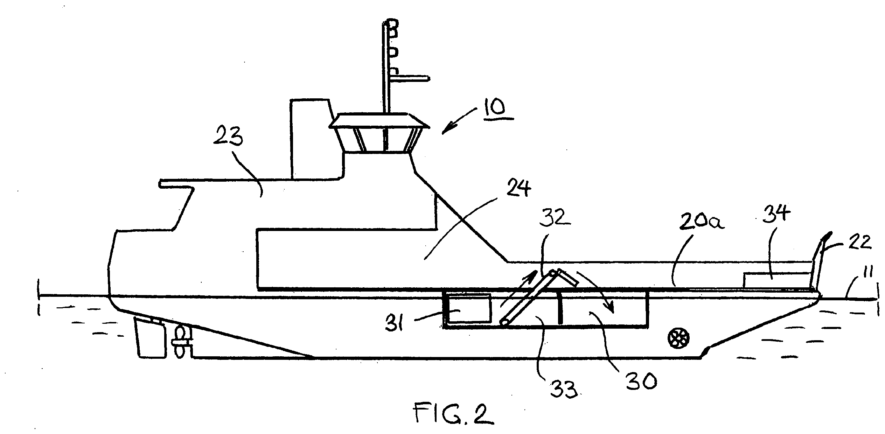

For the sake of clarity, Fig. 1 gives a partially sectional view to show oil recovery tanks 30 in the ferry 10 according to the invention. The oil recovery tanks 30 are located below the car deck 20a, at an open location 24 of the car deck 20a, because the tanks are an explosion hazard during oil recovery. For the same reason, there is a hatch leading to the car deck 20a or the open space 24 for servicing and cleaning the equipment and tanks both on the oil recovery apparatus 32 shown hereafter in Fig. 2 and on the oil recovery tank 30. The maintenance hatches are not shown in these figures.

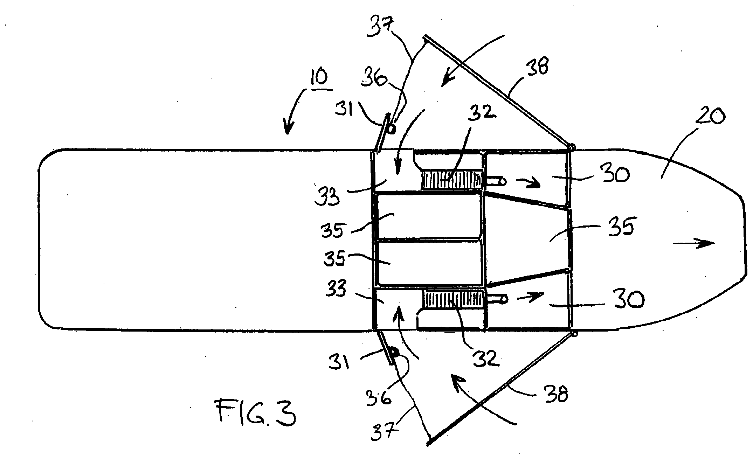

Fig. 1 further shows an oil recovery hatch 31 in the side of the ferry 10, close to the waterline, and the hatch is opened for oil recovery as shown in Fig. 3. All this oil recovery equipment and spaces are in a ferry 10 according to the invention in case the ferry 10 must be used for oil recovery. While carrying passengers in conventional ferry traffic, this equipment of the ferry 10 is not used and remains concealed from the passengers under the car deck 20a.

Fig. 2 shows the ferry 10 of Fig. 1 now in its alternative use, i.e. oil recovery. In this application the ferry 10 has no passengers or vehicles aboard. If necessary, vehicles required for oil recovery can, however, be driven to the car deck 20a of the ferry 10 via the bow gate 22.

When the oil recovery hatch 31 in the side of the ferry 10 is opened, water mixed with oil can enter a recovery space 33 equipped with a brush-type oil recovery apparatus 32. The oil recovery apparatus 32 located in the recovery space 33 is raised out via a hatch in the car deck 20a of the ferry 10, whereby the oil recovery apparatus 32 separates oil from the water and transfers the oil to an intermediate oil recovery tank 30. The oil recovery apparatus 32 can also be of another type. Oil recovery in icy conditions during winter is possible via the bow of the vessel, for instance by means of a brush skimmer installed in container fittings.

The car deck 20a of the ferry 10 can in that case accommodate vehicles, oil recovery containers, any additional tanks and other equipment necessary for recovering an oil spill, such as skimmers, recovery bags etc. The bow gate 22 can also be replaced with a fixed structure where the bow structure used for oil recovery has been moved on wheels into place and affixed there. At the same time, a bow superstructure 34 can be brought to the bow of the ferry 10, whereby the bow superstructure forms a raised forecastle in the ferry. A raised bow superstructure 34 is necessary in rough conditions at open sea.

In Fig. 2, the waterline 11 is at such a location that the draught of the ferry 10 is significantly greater than in regular ferry traffic, when carrying passengers. When recovering an oil spill, without any passengers on-board, the oil recovery tanks 30 of the ferry 10 can be completely filled so that the draught of the ferry 10 is great, as shown in

Fig. 2. The freeboard and damage stability requirements set for an oil recovery vessel are not as stringent as for vessels carrying passengers. Although the ferry 10 has a lower freeboard in oil recovery, the ferry 10 is still seaworthy even at open sea because the bow structure in the ferry 10 is raised by means of a bow superstructure 34. The bow structure can even be made entirely replaceable so that, for oil recovery, the bow gate 22 can be entirely replaced with the bow superstructure 34.

Fig. 3 shows a top view of the ferry 10 used for oil recovery according to Fig. 2, where the oil recovery hatches 31 in the sides of the vessel are open. Thus water mixed with oil can enter the recovery space 33 where the oil recovery apparatus 32 separates the oil from the water and transfers the oil to the oil recovery tank 30 in the side of the ferry 10. This tank 30 can be a rather small intermediate tank from where the recovered oil is transferred to the proper oil recovery tanks 35.

Fig. 3 also shows oil containment boom reels 36 in conjunction with the oil recovery hatches 31 in the side of the ferry 10, from which reels the oil containment boom 37 is pulled out and supported by a telescopic arm 38. Thus, when the ferry 10 being used for oil recovery moves forward, i.e. to the right in Fig. 3, a wide area opens on both sides of the vessel, from where oil is recovered.

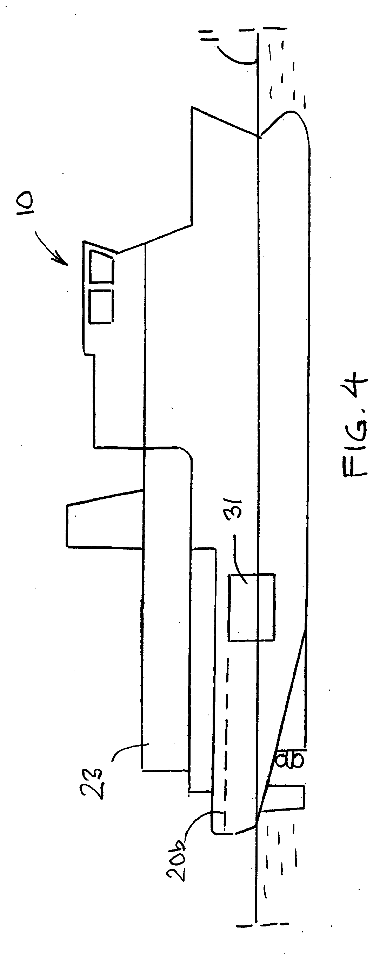

Fig. 4 shows another example of a ship 10 according to the invention as a side view. The ship 10 in this example is a passenger vessel, which in the configuration shown in the figure is in conventional passenger traffic. The ship 10 however differs from a conventional passenger vessel in that the ship 10 has an oil recovery apparatus below the deck 20b, behind an oil recovery hatch 31 in the side of the ship 10. In passenger vessel service, the oil recovery apparatus is not in use and the oil recovery hatch 31 and hatches in the deck 20b of the ship 10 are closed.

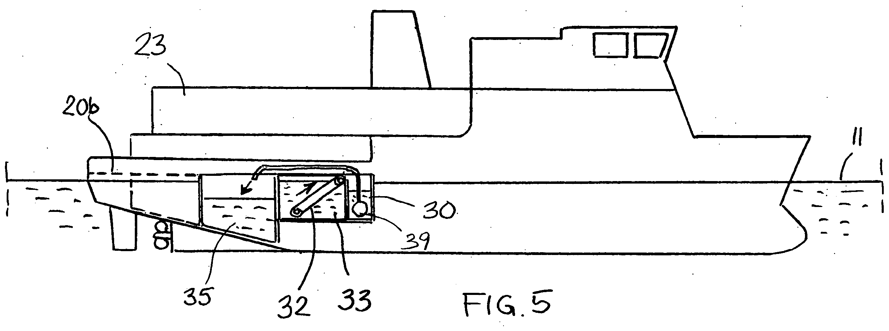

Fig. 5 shows the ship 10 of Fig. 4 in alternative use, i.e. when recovering oil. The passenger vessel has thus become an oil recovery vessel whereby there are no passengers aboard the ship 10. The oil recovery hatch 31 in the side of the ship 10 is opened so that water mixed with oil floating on the water surface 11 can enter a recovery space 33 equipped with the oil recovery apparatus 32. Oil recovered in the intermediate oil recovery tank 30 is further pumped by means of a pump 39 to the proper oil recovery tank 35.

Because safety regulations allow no accommodation facilities on the oil recovery deck 20b of the ship 10, the problem is solved according to the invention by keeping the passenger lounge 23 that is in the middle portion of the deck 20b free of any people during oil recovery. During oil recovery, there is a gas-tight separation between the passenger lounge 23 of the ship 10 and the oil recovery facilities. It can also be pressurised. Thus access to the decks 20b in the stern portion of the ship must be from outside the ship or via a special pressurised passage.

The decks 20b located on both sides of the cabin portion 23 of the ship 10 can function as an oil recovery area as well because the portion between them is not an accommodation facility in accordance with the arrangement presented above. Thus the oil recovery apparatuses 32 and the oil recovery tanks 30 and 35 can be located under the deck 20b so that, from each compartment, a hatch opens up to the deck 20b. Via the hatch, the tank can be serviced, cleaned, filled or emptied. The hatches are not shown in the drawings.

Fig. 5 shows that oil going from the oil recovery hatch 31 in the side of the ship 10 to the recovery space 33 is recovered by means of a recovery apparatus 32, which conveys the oil up into the oil recovery tank 30. The oil recovery tank 30 is a rather small intermediate tank from where the recovered oil is pumped into the proper oil recovery tanks 35 by means of a pump 39.

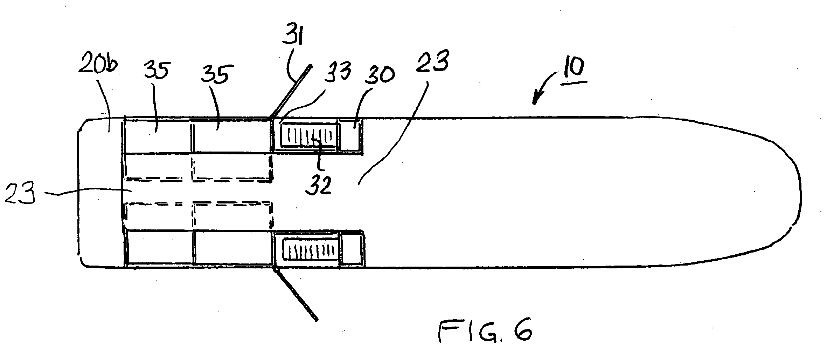

Fig. 6 shows the ship 10 of Fig. 5 as a top view. The ship 10 is a passenger vessel where the passenger lounge 23 is located in the centre of the ship so that it is flanked on both sides by the side decks 20b. In oil recovery service, the lounge 23 is free of people and is gas-tight from the oil recovery spaces located on the deck and below it. Because the oil recovery spaces are classified as an explosion hazard area, access to the aft deck must be from outside or via pressurised passages. Hatches in the deck 20b of the ship 10, such as the hatch of the oil recovery space 33 and the maintenance and cleaning hatches of the oil recovery tanks 30 and 35, can be open during oil recovery.

Fig. 6 shows that, when the oil recovery hatch 31 in the side of the ship 10 is open, oil entering the recovery space 33 is recovered by means of the oil recovery apparatus 32, which conveys the oil up and into the oil recovery tank 30 that serves as an intermediate tank. From there the oil is pumped into the proper oil recovery tanks 35, which are located below the deck 20b of the ship 10 and possibly also below the passenger lounge 23. The recovery tanks 35 are marked with broken lines in Fig. 6.

### ADDITIONAL NOTES

It is obvious to a person skilled in the art that the different embodiments of the invention may vary within the scope of the claims presented below.

### LIST OF REFERENCE NUMBERS

- 10: Ship
- 11: Waterline
- 20a: Car deck
- 20b: Deck
- 21: Lorry
- 22: Bow gate
- 23: Passenger lounge
- 24: Open area in the deck
- 30: Oil recovery tank
- 31: Oil recovery hatch
- 32: Oil recovery apparatus
- 33: Recovery space
- 34: Bow superstructure
- 35: Oil recovery tank
- 36: Oil containment boom reel
- 37: Oil containment boom
- 38: Telescopic arm
- 39: Pump

## Claims

1. A car ferry having an oil recovery apparatus (32) to recover oil from water (11) and an oil recovery tank (30, 35) into which oil recovered from water can be conveyed,
wherein
the oil recovery apparatus (32) and the oil recovery tank (30, 35) are under the car deck (20a) of the ferry,
the oil recovery apparatus (32) is located close to the waterline (11), in a space in the side portion of the ship (10), the space being equipped with a hatch (31) that can be opened to the side to convey oil to the oil recovery apparatus,
the maximum allowed draught of the ferry (10) is substantially larger when recovering oil compared to transportation of passengers and vehicles (21),
the oil recovery tank (30) is located below an open location (24) of the car deck (20a), because the tanks are an explosion hazard during oil recovery, and for the same reason a maintenance hatch leads to the open space (24) for servicing and cleaning equipment and tanks both on the oil recovery apparatus (32) and on the oil recovery tank (30).

2. The ferry (10) according to claim 1, **characterized in that** in the bow of the ferry (10) there is located a bow superstructure (34), such as a forecastle, which increases the freeboard height at the bow of the ferry.

3. The ferry (10) according to claim 2, **characterized in that** the bow superstructure (34) can replace a bow gate (22) of the ferry (10) and be locked in place in order to use the ferry for oil recovery.

4. A method to utilize the ferry according to anyone of the previous claims for at least two different purposes **chracterized** in that - the ferry (10) is ordinarily utilized for transporting passengers and vehicles, and - when necessary, the ferry (10) takes no passengers and is utilized for recovering oil from water (11).

5. The method according to claim 4 **characterized in that** a space (23) intended for passengers on a deck (20b) of the ferry is converted so as to be suitable for recovering oil by making said space gas-tight and separate from the space intended for oil recovery and/or by pressurizing it.

## Patentansprüche

1. Eine Autofähre, ausgestattet mit einer Ölaufnahmevorrichtung (32) zur Aufnahme von Öl aus Wasser (11) sowie mit einem Ölauffangtank (30, 35) in den das aus dem Wasser aufgenommene Öl gefördert werden kann,
wobei
die Ölaufnahmevorrichtung (32) und der Ölauffangtank (30, 35) unterhalb des Autodecks (20a) der Fähre liegen,
die Ölaufnahmevorrichtung (32) sich nahe der Wasserlinie (11) in einem Raum (33) im seitlichen Teil des Schiffs (10) befindet, wobei der Raum mit einer Luke (31) ausgestattet ist, die sich seitlich öffnen lässt, um das Öl in die Aufnahmevorrichtung zu leiten,
der maximal zulässige Tiefgang der Fähre (10) bei der Aufnahme von Öl wesentlich größer ist als während des Transports von Passagieren und Fahrzeugen (21),
sich der Ölauffangtank (30) unterhalb eines offenen Bereichs (24) des Autodecks (20a) befindet, da die Tanks während der Ölaufnahme explosionsgefährdet sind, und aus demselben Grund sowohl an der Ölaufnahmevorrichtung (32) als auch am Ölauffangtank (30) zur Wartung und Reinigung der Ausrüstung und Tanks eine Wartungsluke zum offenen Bereich (24) führt.

2. Fähre (10) gemäß Patentanspruch 1, **dadurch gekennzeichnet, dass** im Bug der Fähre (10) ein Bugaufbau (34) wie zum Beispiel ein Vordeck angebracht ist, das die Freibordhöhe am Bug des Schiffs erhöht.

3. Fähre (10) gemäß Patentanspruch 2, **dadurch gekennzeichnet, dass** der Bugaufbau (34) das Bugtor (22) der Fähre (10) ersetzen und verriegelt werden kann, um die Fähre zur Ölaufnahme zu benutzen.

4. Verfahren zur Nutzung der Fähre gemäß einem der vorgenannten Ansprüche für mindestens zwei verschiedene Verwendungszwecke, **dadurch gekennzeichnet, dass** die Fähre (10) gewöhnlich zum Transport von Passagieren und Fahrzeugen genutzt wird, und
bei Bedarf, die Fähre (10) keine Passagiere aufnimmt und zur Aufnahme von Öl aus Wasser (11) genutzt wird.

5. Verfahren gemäß Patentanspruch 4, **dadurch gekennzeichnet, dass**, um die Aufnahme von Öl zu ermöglichen, ein für Passagiere vorgesehener Raum (23) auf einem Deck (20b) der Fähre so umgewandelt wird, dass der besagte Raum gasdicht gemacht und von dem für die Ölaufnahme vorgesehenen Raum getrennt und/oder unter Druck gesetzt wird.

## Revendications

1. Un car-ferry, ayant un appareil de récupération de pétrole (32) pour récupérer le pétrole à partir de l'eau (11) et un réservoir de récupération de pétrole (30, 35) vers lequel le pétrole récupéré de l'eau peut être transporté,
où
l'appareil de récupération de pétrole (32) et le réservoir de récupération de pétrole (30, 35) sont situés sous le pont garage (20a) du ferry,
l'appareil de récupération de pétrole (32) est situé près de la ligne de flottaison (11), dans un espace (33) dans la portion latérale du navire (10), l'espace étant équipé d'une trappe (31) qui peut être ouverte vers le côté pour transporter le pétrole vers l'appareil de récupération de pétrole,
le tirant d'eau maximum permis du ferry (10) est essentiellement plus grand lors de la récupération de pétrole par rapport au transport de passagers et de véhicules (21),
le réservoir de récupération de pétrole (30) est situé sous un emplacement ouvert (24) du pont garage (20a), parce que les réservoirs constituent un risque explosif pendant la récupération de pétrole, et pour la même raison, une trappe de maintenance conduit à l'emplacement ouvert (24) pour entretenir et nettoyer les équipements et les réservoirs aussi bien sur l'appareil de récupération de pétrole (32) que sur le réservoir de récupération de pétrole (30).

2. Le ferry (10) selon la revendication 1, **caractérisé en ce que** dans l'étrave du ferry (10) il se trouve une superstructure d'étrave (34), telle qu'un gaillard, qui augmente la hauteur de franc-bord à l'étrave du ferry.

3. Le ferry (10) selon la revendication 2, **caractérisé en ce que** la superstructure d'étrave (34) peut remplacer la porte d'étrave (22) du ferry (10) et être verrouillé en place afin d'utiliser le ferry pour la récupération de pétrole.

4. Une méthode pour utiliser le ferry selon l'une quelconque des revendications cidessus à au moins deux fins différentes, **caractérisée en ce que** le ferry (10) est ordinairement utilisé pour transporter des passagers et des véhicules, et au besoin, le ferry (10) ne prend pas de passagers et est utilisé pour récupérer le pétrole de l'eau (11).

5. La méthode (10) selon la revendication 4, **caractérisée en ce qu'un** espace (23) prévu pour les passagers sur un pont (20b) du ferry est transformé afin de permettre la récupération de pétrole en rendant ledit espace étanche aux gaz et le séparant de l'espace prévu pour la récupération de pétrole et/ou en le pressurisant.
